# EUROPÄISCHE PATENTANMELDUNG

(11) **EP 4 015 459 A1**
(43) Veröffentlichungstag der Anmeldung: **22.06.2022**
(21) Anmeldenummer: 20216002.4
(22) Anmeldetag: 21.12.2020
(51) Int. Cl.: C01G 49/00, C01G 49/02

(54) **VERFAHREN ZUR HERSTELLUNG VON EISENOXIHYDROXID**

(71) Anmelder: LANXESS Deutschland GmbH, 50569 Köln (DE)
(72) Erfinder: SCHLEGEL, Andreas, 47800 Krefeld (DE); CZAPLIK, Waldemar, 47877 Willich (DE)

(57) **Zusammenfassung**

Die Erfindung betrifft ein Verfahren zur Herstellung von Eisenoxihydroxiden durch Zugabe einer wässrigen Eisensalzlösung (A) und einer alkalischen, wässrigen Fällungsmittellösung (B) zu einer Vorlage unter Einhaltung eines pH-Wertes in dem Bereich von 6 bis 10.

## Beschreibung

Die Erfindung betrifft ein Verfahren zur Herstellung von Eisenoxihydroxiden.

Eisenoxihydroxide, die durch Fällung von Eisen(III)salzen mit einem alkalischen Fällungsmittel oder durch Fällung von Eisen(II)salzen mit einem alkalischen Fällungsmittel und anschließender Oxidation erhalten werden, finden als Farbpigmente zahlreiche Anwendungen. Aber auch andere Anwendungen beispielsweise als Adsorber oder Katalysatoren zur Herstellung von Polymeren sind bekannte Einsatzgebiete. Insbesondere bei dem Einsatz als Katalysatoren werden hohe Ansprüche an das Nebenproduktspektrum gestellt.

Die Herstellung von Eisenoxihydroxide ist beispielsweise in EP1582505A1 beschrieben, wobei entweder eine Eisen(III)sulfatlösung vorgegeben wird und NaOH als Fällmittel zugegeben wird oder umgekehrt. Über die folgende Syntheseroute ist dabei beispielsweise ein amorphes Eisen(III)hydroxid zugänglich.

Fe₂(SO₄)₃ + 6 NaOH → 2 Fe(OH)₃ + 3 Na₂SO₄

Legt man nach dem oben beschriebenen Verfahren das Fällmittel NaOH vor und gibt das Eisensalz dazu, so erhält man als Produkt Eisenoxihydroxide mit sehr hohem Na-Gehalt. Verfährt man umgekehrt und gibt man zu dem vorgelegten Eisensalz das Fällmittel NaOH hinzu, so erhält man als Produkt Eisenoxihydroxide mit sehr hohem Schwefelgehalt. Die nach beiden Varianten hergestellten Eisenoxihydroxide haben aber insbesondere noch für Katalysatoranwendungen zu hohe Natrium- und/oder Schwefelgehalte, die sich jeweils auch durch mehrmaliges Waschen nicht wesentlich reduzieren lassen.

Auch die Herstellung von Eisenoxihydroxiden ausgehend von einer vorgelegten Eisen(II)-sulfatlösung durch Zugabe von NaOH und anschließender Luftoxidation führt zu Eisenoxidhydroxiden mit zu hohen Natrium- und Schwefelgehalten, die sich ebenfalls durch mehrmaliges Waschen nicht wesentlich reduzieren lassen. Ein entsprechendes Verfahren ist beispielsweise in der WO02/026632 beschrieben.

Aus Eisen(II)-Salzlösungen fällt dabei durch Zusatz von Alkalilauge bei Luftausschluss weißes Fe(OH)₂ aus. An der Luft erfolgt dann die Oxidation über graugrüne, dunkelgrüne, schwärzliche Zwischenstufen. Während man bei der Oxidation von Fe(OH)₂ weitgehend kristalline Phasen erhält, bildet sich Fe(OH)₃ beim Versetzen einer Eisen(III)-Salzlösung mit Hydroxiden in amorpher Form.

Eisen(III)-Hydroxid Fe(OH)₃ fällt dabei üblicherweise als wasserhaltiges Hydrogel der Formel Fe₂O₃•n H₂O ("Eisen(III)-Oxi-Hydrat") aus.

Das Ion [Fe(H₂O)₆]³⁺ ist bei pH-Werten < 0 stabil und geht bei pH = 0-2 in gelbbraunes [Fe(OH)(H₂O)₅]²⁺, bei pH 2-3 in [Fe(OH)₂(H₂O)₄]⁺ und mehrkernige Komplexe, z. B. 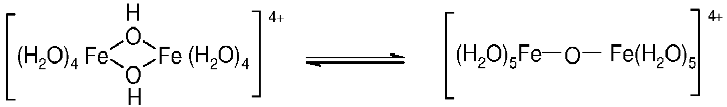 und bei pH 3-5 in mehrkernige Isopolyoxo-Kationen über. Weitergehende Polymerisation führt zu rotbraunen kolloidalen sphärischen polynuklearen Spezies. Das wasserhaltige Hydrogel ist amorph, strukturlos, das heißt es besteht zwar eine lokale Nahordnung der Anionen (OH-) und (O₂-) um das zentrale Fe³⁺-Kation, eine Fernordnung d.h. die dreidimensionale regelmäßige Wiederholung eines Strukturelementes im Raum unter Bildung eines Kristallgitters unterbleibt jedoch.

In der Literatur ist hierfür auch der Begriff "Two-Line-Ferrihydrite" etabliert, als Formel wird oftmals Fe₂O₃ • n H₂O angegeben, um den nicht definierten Wassergehalt zu dokumentieren [U. Schwertmann, R. M. Cornell, Iron Oxides in the Laboratory, S. 103 - 112, Wiley-VCH, 2000].

Es besteht aus weitgehend amorphem Eisenhydroxid, welches im Röntgenpulverdiffraktogramm zwei sehr breite Signale zeigt. Es können spezifische Oberflächen nach BET-Methode von ca. 280 bis 350 m²/g gemessen werden.

Nicht nur Schwefel in Form von Sulfat und Natriumionen, die aus den entsprechenden Edukten, dem Eisensalz bzw. dem Fällmittel stammen, werden nach dem bekannten Verfahren fest in das Eisenhydroxid-Gitter eingebaut und lassen sich selbst durch intensives Waschen mit vollentsalztem Waschen nicht ganz entfernen. Im Falle von anderen Eisenquellen wie im Falle von Eisen(III)chlorid lässt sich der Chlorgehalt ebenfalls schwer reduzieren, obwohl dieser wegen der Korrosionsneigung in den meisten Fällen unerwünscht ist.

Führt man die Fällung beispielsweise ausgehend von Eisen(III)chlorid durch, entsteht bevorzugt die Phase β-FeOOH (Akaganeit), welches bedingt durch dessen besondere Struktur hohe Chloridgehalte aufweist. Gleiches gilt für die Anionen von anderen Eisenquellen und Kationen der Fällungsmittel.

Aufgabe der vorliegenden Erfindung war es daher, ein Verfahren bereitzustellen, mit dem es möglich ist, Eisenoxihydroxide mit möglichst geringem Gehalt an aus dem Fällungsmittel stammenden Kationen, insbesondere Alkali- und/oder Erdalkalimetallen, bei gleichzeitig möglichst geringem Gehalt an aus dem als Eisensalzen stammenden Anionen, insbesondere Schwefel- und/oder Chlorid.

### Verfahren

Die Erfindung betrifft daher ein Verfahren zur Herstellung von Eisenoxihydroxiden, das dadurch gekennzeichnet ist, dass man
i) eine wässrige Eisensalzlösung (A) und eine alkalische, wässrige Fällungs-mittellösung (B), vorzugsweise eine Alkalihydroxidlösung miteinander vermischt, wobei die Vermischung so erfolgt, dass der pH-Wert in der sich bildenden Mischung während der Zugabe von (A) und (B) in eine Vorlage in dem Bereich von 6 bis 10 gehalten wird,
ii) wobei im Falle einer wässrigen Eisensalz-Lösung (A) eines Fe(II)-Salzes während oder nach der Vermischung von (A) und (B) sauerstoffhaltiges Gas zur Oxidation von Fe(II) in Fe(III) eingeleitet wird,
iii) die nach Schritt i) oder ii) erhaltene Suspension vom Feststoff getrennt wird,
iv) der nach Schritt iii) erhaltene Feststoff, insbesondere der Filterkuchen mit vollentsalztem (VE)-Wasser, vorzugsweise bis zu einer Filtratleitfähigkeit von kleiner 2000 µS/cm gewaschen wird und
v) der nach Schritt iv) gewaschene Feststoff getrocknet wird.

### Eisenoxihydroxide

Die nach dem erfindungsgemäßen Verfahren herzustellenden Eisenoxihydroxide umfassen dabei die kristallinen Formen wie FeO, Fe₂O₃, Fe₃O₄ und FeOOH als auch die amorphen Formen wie Fe(OH)₃ sowie seine wasserhaltigen Hydrogele.

### Schritt i)

### Eisensalzlösung (A)

Als Eisensalz der wässrigen Eisensalzlösung (A) können sowohl Eisen(II) als auch Eisen(III)-Salze eingesetzt werden. Im Fall von Eisen(III)-Salzen, die bevorzugt sind, können vorzugsweise Eisen(III)sulfat, Eisen(III)nitrat, Eisen(III)chlorid, Eisen(III)phosphat, Eisen(III)chloridsulfat oder jedes andere Eisen(III)salz verwendet werden. Bevorzugt ist Eisen(III)sulfat oder Eisen(III)chlorid.

Im Fall von Eisen(II)-Salzen, können vorzugsweise Eisen(II)sulfat, Eisen(II)nitrat, Eisen(II)-chlorid, Eisen(II)phosphat oder jedes andere Eisen(II)salz verwendet werden. Bevorzugt ist Eisen(II)chlorid sowie Eisen(II)sulfat.

Entsprechend dem eingesetzten Anion kann mit dem erfindungsgemäßen Verfahren der Restanteil daran im erhaltenen Eisenoxihydroxid sehr weit reduziert werden. Gemessen wird dieser Anteil üblicherweise beispielhaft für Sulfat als Schwefelgehalt, für Chlorid vorzugsweise als Choridgehalt und für Nitrat als Nitratgehalt.

Bevorzugt enthält die wässrige Eisensalzlösung (A) von 10 bis 1000 g/L, vorzugsweise 50 bis 800 g/L an Eisensalz, bezogen auf die wässrige Eisensalzlösung (A). Die Lösung kann neben Wasser auch noch organische Lösungsmittel enthalten, als solche sind beispielsweise aliphatische Alkohole wie Methanol, Ethanol, Propanol wie iso-Propanol, Butanol oder andere zu nennen.

Der Anteil an Wasser, bezogen auf den Gesamtgehalt an Lösungsmittel der wässrigen Eisensalzlösung (A) beträgt vorzugsweise von 90 bis 100 Gew.-%, vorzugsweise 99 bis 100 Gew.-%.

### Alkalische, wässrige Fällungsmittel-Lösung (B)

Als Fällungsmittel der alkalischen wässrigen Fällungsmittellösung (B) wird beispielsweise Alkali- oder Erdalkalihydroxyde, insbesondere NaOH oder KOH oder Ca(OH)₂, Alkali- oder Erdalkalicarbonate wie Na₂CO₃, K₂CO₃, CaCO₃ oder MgCO₃, Erdalkalioxide wie MgO oder CaO oder NH₃ oder NH₄OH verwendet werden. Bevorzugt ist für die Komponente (B) eine Alkalihydroxidlösung.

Bevorzugt enthält die alkalische, wässrige Fällungsmittellösung (B) von 10 bis 600 g/L vorzugsweise von 50 bis 440 g/L an Fällungsmittel, bezogen auf die Lösung. Die Lösung kann neben Wasser auch noch organische Lösungsmittel enthalten, als solche sind beispielsweise aliphatische Alkohole wie Methanol, Ethanol, Propanol wie iso-Propanol, Butanol oder andere zu nennen.

Der Anteil an Wasser bezogen auf den Gesamtgehalt an Lösungsmittel der wässrigen Fällungsmittellösung (B) beträgt vorzugsweise 90 bis 100 Gew.-%, vorzugsweise 99 bis 100 Gew.-%.

Die Vorlage, zu der die beiden Lösungen (A) und (B) zugegeben werden ist vorzugsweise ein leerer Behälter oder ein Wasser enthaltender Behälter. Der pH-Wert kann über eine pH-Sonde in der Reaktionsmischung, vorzugsweise -suspension gemessen. Die Vermischung kann dabei bereits während der Zugabe erfolgen bspw. über ein Mischelement für die Zugabeströme oder erst in der Vorlage beispielsweise durch ein dort angebrachtes Mischelement. Als übliche Mischelemente kommen Rührer oder statische Mischer in Frage. Weiterhin kann Luft während der Zugabe in die Vorlage als Unterstützung für eine gute Durchmischung eingeleitet werden. Diese kann auch bei der Verwendung von Fe(III) Salzen erfolgen, die nicht während oder nach der Zugabe oxidiert werden müssen.

Die Zugabe der Komponenten (A) und (B) zur Vorlage kann dabei kontinuierlich oder portionsweise erfolgen.

Zur pH-Bestimmung kann jede handelsübliche pH-Sonde verwendet werden.

Die Zugabe der beiden Komponenten (A) und (B) erfolgt dabei vorzugsweise so, dass durch die Zugabe der beiden Komponenten (A) und (B) ein pH-Wert aus dem Bereich von 6 bis 10, insbesondere von 6,5 bis 9,5 während der Zugabe gehalten wird. Bevorzugt erfolgt die Zugabe bei einem gewählten pH-Wert mit einer Abweichung von +/- 0,5 pH Einheiten.

Zu Beginn der Zugabe verändert sich der pH-Wert gegenüber dem Anfangs-pH-Wert der Vorlage in der Regel stärker, so dass sich in der Regel erst nach einer kurzen Anfangszeit der pH-Wert um einen Wert stabilisiert. Bevorzugt erfolgt daher die Einstellung des pH-Wertes in dem jeweiligen Bereich so, dass dieser über 95% der gesamten Zugabeperiode von A) und B) zur Vorlage innerhalb dieses Bereiches liegt, insbesondere liegt der gewünschte pH-Wert ,vorzugsweise mit einer Abweichung von +/- 0,5 pH Einheiten, in diesem Bereich. Vorzugsweise erfolgt die Zugabe der Eisensalzlösung (A) zur Vorlage kontinuierlich, vorzugsweise mit gleichbleibender Zugabegeschwindigkeit und die Zugabe der Fällungsmittellösung (B) erfolgt so, dass sich dadurch der gewünschte pH-Wert in dem genannten Bereich halten lässt.

Dabei kann es bei der Zugabe von A) und B) zur Vorlage durchaus auch zu Zugabeschwankungen von dem jeweiligen gewünschten stöchiometrischen Verhältnis der beiden Komponenten kommen. Abweichungen von dem jeweiligen gewünschten stöchiometrischen Verhältnis von bis zu 10% der Stöchiometrie während der Zugabe sind dabei durchaus normal.

Die Vermischung erfolgt dabei vorzugsweise bei freiem Temperaturverlauf, besonders bevorzugt bei einer Temperatur von 10 bis 100°C.

Nach der Vermischung der Komponenten (A) und (B) wird eine wässrige Suspension von Eisenoxihydroxiden erhalten. Die erhaltenen Feststoffpartikel weisen vorzugsweise eine BET Oberfläche von 50 bis 400 g/m², vorzugsweise von 50 bis 300 g/m² auf.

### Schritt ii)

Sofern ein Eisensalz der Oxidationsstufe +2 verwendet wird, wird vorzugsweise schon während der Vermischung der beiden Komponenten A) und B) Sauerstoff oder ein sauerstoffhaltiges Gas, insbesondere Luft zugegeben. Dies erfolgt vorzugsweise durch Einleiten von Sauerstoff oder einem sauerstoffhaltigen Gas in die Vorlage während der Zugabe der beiden Komponenten. Die Einleitung von Sauerstoff oder einem sauerstoffhaltigen Gas in die Vorlage kann auch im Anschluss an die Zugabe der beiden Komponenten A) und B) erfolgen.

### Schritt iii)

Die nach Schritt ii) oder iii) erhaltene wässrige Suspension wird vom Feststoff getrennt, vorzugsweise durch Filtration beispielsweise mittels einer Filterpresse filtriert oder durch Zentrifugieren.

### Schritt iv)

Der nach Schritt iii) erhaltene Feststoff, insbesondere der Filterkuchen wird vorzugsweise mit vollentsalztem (VE) Wasser, vorzugsweise bis zu einer Filtratleitfähigkeit von < 1000 µS/cm, insbesondere < 300 µS/cm, besonders bevorzugt < 100 µS/cm gewaschen. Die Messung der Leitfähigkeit des Filtrats wird dabei mit üblichen Leitfähigkeitsmessgeräten bestimmt.

### Schritt v)

Die Trocknung des nach der Waschung gemäß Schritt iv) erhaltenen Feststoffes erfolgt üblicherweise bei einer Temperatur von 60 bis 300°C, insbesondere bei 60 bis 100°C. Als Trockner kommen übliche Trockner für Pigmente in Frage. Vorzugsweise wird bis zu einer Restfeuchte von kleiner als 1 Gew.-% Wasser, bezogen auf den Feststoff getrocknet.

Der Trocknung kann sich auch noch eine Mahlung anschließen, beispielsweise um eine Zerteilung der Agglomerate und Aggregate zu erreichen. Dies kann vorteilhaft sein, um beispielsweise eine gleichmäßige Dispergierung im Anwendungsmedium zu ermöglichen.

### Beispiele

### Vergleichsbeispiel 1 (=Vergleich 1) (analog zu Beispiel 1 der EP1582505)

15 L Fe₂(SO₄)₃-Lösung mit einem Gehalt an Fe₂(SO₄)₃ von 107 g/L wurden bei 50°C vorgelegt und mit 3,5 L NaOH-Lösung (302 g/L) und einer Zugabegeschwindigkeit von 67 g/min unter Rühren bis pH 7 gefällt und 30 min. nachgerührt. Die erhaltende Schlusssuspension enthält 37 g/ FeOOH.

Ca. 5 L der erhaltenden Suspension wurden auf einer Laborfilterpresse mit VE-Wasser bis zur Filtratleitfähigkeit < 100 µS/cm gewaschen. Der Filterkuchen wurde bei 75°C im Umlufttrockenschrank getrocknet und das getrocknete Eisenhydroxid mit der Labormühle leicht aufgemahlen.

### Elementanalyse siehe Tabelle 1

### Vergleichsbeispiel 2 (= Vergleich 2) (analog zu Beispiel 1 der EP1582505)

15 L Fe₂(SO₄)₃-Lösung (107 g/L) wurden bei 50 °C vorgelegt und mit 3,4 L NaOH-Lösung (309 g/L) und einer Zugabegeschwindigkeit von 65 g/min unter Rühren bis pH 8 gefällt und 30 min. nachgerührt. Die erhaltende Schlusssuspension enthält 37 g/ FeOOH.

Ca. 5 L der erhaltenen Suspension wurden auf der Nutsche bis zur Filtratleitfähigkeit 146 µS/cm gewaschen, der erhaltene Filterkuchen bei 75°C im Umlufttrockenschrank getrocknet und das getrocknete Eisenhydroxid mit einem Laborschroter zerkleinert.

### Elementaranalyse siehe Tabelle 1

### Vergleichsbeispiel 3 (= Vergleich 3) (analog zu Beispiel 3 der EP1582505)

16 L NaOH-Lösung (mit 60 g/L NaOH) wurden vorgelegt und unter Rühren auf 50°C aufgeheizt. Dann wurden bei freiem Temperaturverlauf 2,4 L Fe₂(SO₄)₃-Lösung (mit 107 g/L Fe₂(SO₄)₃) mit einer Zugabegeschwindigkeit von 65 g/min. bis pH 9 zugegeben.

### Der Ansatz wurde 15 min nachgerührt.

Dann wurde der Ansatz auf einer Laborfilterpresse bis zur Filtratleitfähigkeit < 100 µS/cm gewaschen. Der Filterkuchen wurde bei 75°C im Umlufttrockenschrank bis zur Gewichtskonstanz getrocknet und der Feststoff mit einer Labormühle leicht aufgemahlen.
Auswaage: 301 g Feststoff

### Elementaranalyse siehe Tabelle 1

### Beispiel 1 (erfindungsgemäß)

12.186 g vollentsalztes (VE)-Wasser wurden vorgelegt und unter Rühren auf 50°C aufgeheizt. Dann wurden bei freiem Temperaturverlauf 4200 g Fe₂(SO₄)₃-Lösung (mit 637 g/L 42% Fe₂(SO₄)₃) mit einer Zugabegeschwindigkeit von 32 g/min. zugeben, wobei der pH-Wert durch gleichzeitige Zugabe von NaOH-Lösung (mit 313 g/L NaOH) bei 7,0 gehalten wurde.

Die erhaltene Suspension wurde auf einer Laborfilterpresse bis zur Filtratleitfähigkeit < 90 µS/cm gewaschen. Der Filterkuchen wurde bei 75°C im Umlufttrockenschrank getrocknet und der getrocknete Feststoff mit einer Labormühle leicht aufgemahlen.
Auswaage: 640 g Feststoff
Analysen: FeOOH-Gehalt in Suspension = 39,7 g/L; BET = 93 m²/g
Elementaranalyse siehe Tabelle 1.

### Beispiel 2 (erfindungsgemäß)

12.186 g VE-Wasser wurden vorgelegt und unter Rühren auf 50°C aufgeheizt. Dann wurden bei freiem Temperaturverlauf 4200g Fe₂(SO₄)₃-Lösung (mit 637 g/L Fe₂(SO₄)₃) mit einer Zugabegeschwindigkeit von 32 g/min. zugegeben, wobei der pH-Wert durch gleichzeitige Zugabe von NaOH-Lösung (mit 313 g/L NaOH) bei 8,0 gehalten wurde.

Die erhaltene Suspension wurde auf der Laborfilterpresse bis zur Filtratleitfähigkeit < 90 µS/cm gewaschen. Der Filterkuchen wurde bei 75°C im Umlufttrockenschrank getrocknet und der getrocknete Feststoff mit einer Labormühle leicht aufgemahlen.
Auswaage: 681 g Feststoff
Analyse: FeOOH-Gehalt in Suspension = 51,6 g/L; BET = 126 m²/g
Elementaranalyse siehe Tabelle 1

### Beispiel 3 (erfindungsgemäß)

12.186 g VE-Wasser wurden vorgelegt und unter Rühren auf 50°C aufgeheizt. Dann wurden bei freiem Temperaturverlauf 4200 g Fe₂(SO₄)₃-Lösung (mit 637 g/L Fe₂(SO₄)₃) mit einer Zugabegeschwindigkeit von 32 g/min. zugegeben, wobei der pH-Wert durch gleichzeitige Zugabe von NaOH-Lösung (mit 313 g/L NaOH) bei 8,5 gehalten wurde.

Die erhaltende Supension wurde auf der Laborfilterpresse bis zur Filtratleitfähigkeit < 90 µS/cm gewaschen. Der Filterkuchen wurde bei 75°C im Umlufttrockenschrank getrocknet und der getrocknete Feststoff mit der Labormühle leicht aufgemahlen.
Auswaage: 661 g Feststoff
Analyse: FeOOH-Gehalt in Suspension = 42,4 g/L; BET = 152 m²/g

### Elementaranalyse siehe Tabelle 1

### Beispiel 4 (erfindungsgemäß)

12.186 g VE-Wasser wurden vorgelegt und unter Rühren auf 50°C aufgeheizt. Dann wurden bei freiem Temperaturverlauf 4200 g Fe₂(SO₄)₃-Lösung (mit 637 g/L Fe₂(SO₄)₃) mit einer Zugabegeschwindigkeit von 32 g/min. zugegeben, wobei der pH-Wert durch gleichzeitige Zugabe von NaOH-Lösung (mit 313 g/L NaOH) bei 9,0 gehalten wurde.

Die erhaltende Suspension wurde auf einer Laborfilterpresse bis zur Filtratleitfähigkeit < 90 µS/cm gewaschen. Der Filterkuchen wurde bei 75°C im Umlufttrockenschrank getrocknet und der getrocknete Feststoff mit einer Labormühle leicht aufgemahlen.
Auswaage: 660 g Feststoff
Analyse: FeOOH-Gehalt in Suspension = 41,1 g/L; BET = 177 m²/g

### Elementaranalyse siehe Tabelle 1

### Beispiel 5 (erfindungsgemäß)

12.055 g VE-Wasser wurden vorgelegt und unter Rühren auf 50°C aufgeheizt. Dann wurden bei freiem Temperaturverlauf 4.167 g FeCl₃-Lösung (mit 517 g/L FeCl₃) mit einer Zugabegeschwindigkeit von 28 g/min. zugegeben, wobei der pH-Wert durch gleichzeitige Zugabe von KOH-Lösung (mit 420 g/L KOH) bei 8,0 gehalten wurde.

Die Suspension wurde auf einer Laborfilterpresse bis zur Filtratleitfähigkeit < 90 µS/cm gewaschen. Der Filterkuchen wurde bei 75°C im Umlufttrockenschrank getrocknet und der getrocknete Feststoff mit einer Labormühle leicht aufgemahlen.
Auswaage: 656 g Feststoff
Analyse: FeOOH-Gehalt in Suspension = 40,6 g/L; BET = 162 m²/g

### Elementaranalyse siehe Tabelle 1

### Beispiel 6 (erfindungsgemäß)

10.840 g VE-Wasser wurden bei 25°C unter Rühren vorgelegt. Dann wurden bei freiem Temperaturverlauf 7205 g FeSO₄-Lösung (mit 249 g/L FeSO₄) mit einer Zugabegeschwindigkeit von 100 g/min. zugegeben, wobei der pH-Wert durch gleichzeitige Zugabe von NaOH-Lösung (mit 313 g/L NaOH) bei 8,5 gehalten wurde. Gleichzeitig mit der Zugabe der NaOH Lösung erfolgte auch noch die Zugabe von 800 Uh Luft.

Die erhaltende Suspension wurde auf der Laborfilterpresse bis zur Filtratleitfähigkeit < 90 µS/cm gewaschen. Der Filterkuchen wurde bei 75°C im Umlufttrockenschrank getrocknet und der getrocknete Feststoff mit einer Labormühle leicht aufgemahlen.
Auswaage: 704 g Feststoff
Analyse: FeOOH-Gehalt in Suspension = 38,7 g/L; BET = 121 m²/g

### Elementaranalyse siehe Tabelle 1

### Beispiel 7 (erfindungsgemäß)

10.840 g VE-Wasser wurden bei 25°C unter Rühren vorgelegt. Dann wurden bei freiem Temperaturverlauf 7205 g FeSO₄-Lösung (mit 249 g/L FeSO₄) mit einer Zugabegeschwindigkeit von 100 g/min. zugegeben, wobei der pH-Wert durch gleichzeitige Zugabe von NaOH-Lösung (mit 313 g/L NaOH) bei 9,0 gehalten wurde. Gleichzeitig mit der Zugabe der NaOH Lösung erfolgte auch noch die Zugabe von 800 Uh Luft.

Die erhaltende Suspension wurde auf einer Laborfilterpresse bis zur Filtratleitfähigkeit < 90 µS/cm gewaschen. Der Filterkuchen wurde bei 75°C im Umlufttrockenschrank getrocknet und der getrocknete Feststoff mit einer Labormühle leicht aufgemahlen.
Auswaage: 707 g Feststoff
Analyse: FeOOH-Gehalt in Suspension = 39,8 g/L; BET = 121 m²/g

### Elementaranalyse siehe Tabelle 1

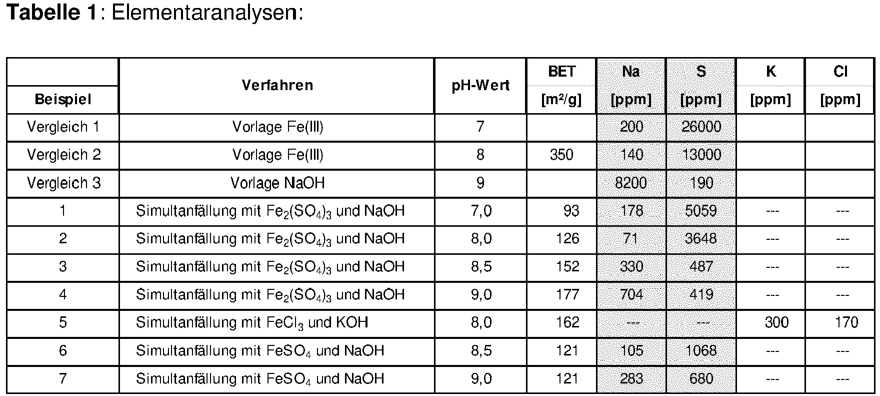

## Patentansprüche

1. Verfahren zur Herstellung von Eisenoxihydroxiden, **dadurch gekennzeichnet, dass** man
i) eine wässrige Eisensalzlösung (A) und eine alkalische, wässrige Fällungsmittellösung (B), vorzugsweise eine Alkalihydroxidlösung miteinander vermischt, wobei die Vermischung so erfolgt, dass der pH-Wert in der sich bildenden Mischung während der Zugabe von (A) und (B) in eine Vorlage in dem Bereich von 6 bis 10 gehalten wird,
ii) wobei im Falle einer wässrigen Fe(II)-Salz-Lösung (A) während oder nach der Vermischung von (A) und (B) sauerstoffhaltiges Gas zur Oxidation von Fe(II) in Fe(III) eingeleitet wird,
iii) die nach Schritt i) oder ii) erhaltene Suspension vom Feststoff getrennt wird,
iv) der nach Schritt iii) erhaltene Feststoff mit VE-Wasser, vorzugsweise bis zu einer Filtratleitfähigkeit von kleiner 2000 µS/cm gewaschen wird und
v) der nach Schritt iv) erhaltenen Feststoff getrocknet wird.

2. Verfahren gemäß Anspruch 1, **dadurch gekennzeichnet, dass** man als Eisensalz der wässrigen Eisensalzlösung (A) ein Fe(III)-Salz, vorzugsweise Eisen(III)sulfat, Eisen(III)chlorid, Eisen(III)chloridsulfat oder Eisen(III)nitrat verwendet.

3. Verfahren gemäß Anspruch 1 oder 2, **dadurch gekennzeichnet, dass** man als Einsalz der wässrigen Eisensalzlösung (A) Eisen(III)sulfat verwendet.

4. Verfahren gemäß wenigstens einem der Ansprüche 1 bis 3, **dadurch gekennzeichnet, dass** man als alkalische, wässrige Fällungsmittellösung (B) eine wässrige Alkalihydroxidlösung, insbesondere eine NaOH oder KOH Lösung, vorzugsweise Natriumhydroxidlösung verwendet.

5. Verfahren gemäß wenigstens einem der Ansprüche 1 bis 4, **dadurch gekennzeichnet, dass** die Vermischung so erfolgt, dass der pH-Wert der sich bildenden Mischung in der Vorlage bei 6,5 bis 9,5 gehalten wird.
